**Europäisches Patentamt**

**European Patent Office**

**Office européen des brevets**

(19)

(11) **EP 1 316 579 A1**

(12) **EUROPEAN PATENT APPLICATION**
published in accordance with Art. 158(3) EPC

(43) Date of publication:
**04.06.2003 Bulletin 2003/23**

(21) Application number: **01958496.0**

(22) Date of filing: **27.08.2001**

(51) Int Cl.7: **C08J 3/20**, C08J 7/00,
C08L 101/00

(86) International application number:
**PCT/JP01/07294**

(87) International publication number:
**WO 02/018481 (07.03.2002 Gazette 2002/10)**

(84) Designated Contracting States:
**AT BE CH CY DE DK ES FI FR GB GR IE IT LI LU
MC NL PT SE TR**

(30) Priority: **28.08.2000 JP 2000257474**

(71) Applicant: **Mitsui Chemicals, Inc.
Tokyo 100-6070 (JP)**

(72) Inventors:
• **Nishikawa, Shigeo c/o Mitsui Chemicals, Inc.
Sodegaura-shi, Chiba 299-0265 (JP)**

• **Sugihara, Eiichi c/o Mitsui Chemicals, Inc.
Sodegaura-shi, Chiba 299-0265 (JP)**
• **SHIMADA, Yoko
Kodaira-shi, Tokyo 187-0031 (JP)**

(74) Representative: **Strehl Schübel-Hopf & Partner
Maximilianstrasse 54
80538 München (DE)**

(54) **POLYMER COMPOSITION, MOLDED ARTICLES CONTAINING THE SAME AND PROCESSES FOR THE PRODUCTION OF BOTH**

(57) A polymer composition (A) characterized by comprising a polymer (b) and at least one kind of substance (a) having a critical temperature of 0 to 150°C and a critical pressure of 3 to 10 MPa, the initial content of the substance (a) in the polymer composition being 2 to 70 parts by weight relative to 100 parts by weight of the polymer (b), wherein the release duration time of the substance (a) is at least 100 hours at atmospheric pressure at 25°C.

Fig. 1

EP 1 316 579 A1

**Description**

Technical Field

The present invention relates to a polymer composition usable as a material for controlling and maintaining a gas environment and capable of releasing a substance, as well as to a molded article comprising such a polymer composition.

Background Art

In recent years, there have been proposed, for efficient feeding of a gas, gas-sustained-release resin materials which are a resin containing a gas-generating agent. There have been proposed, in particular, a number of such resin materials capable of releasing, when reacted with water, a gas such as oxygen, carbon dioxide or the like.

For example, JP-A-11-49899 discloses an invention regarding a resin molded article for carbon dioxide release characterized in that it is formed from a composition of an organic resin having a water vapor permeability of 0.1 g·mm/m$^2$·day or more at 40°C and 90% RH and a carbon dioxide-generating agent, in a state that the gas release is suppressed substantially and further characterized in that the carbon dioxide-generating agent is activated by water. As the carbon dioxide-generating agent, there is used a material which is activated in the presence of water, such as bicarbonate, combination of bicarbonate and organic acid, or the like. The literature discloses a process for adding a bicarbonate and an organic acid to a thermoplastic resin and molding the resulting mixture into a resin molded article for carbon dioxide release by a molding method such as extrusion molding, injection molding or the like. In molding a thermoplastic resin by extrusion molding, injection molding or the like, however, it is necessary to give rise to melting at a temperature at least equal to the melting point of the resin used and it is very difficult to achieve the molding with no decomposition of the bicarbonate or the organic acid.

Further, in the case of the gas-releasing resin material wherein the carbon dioxide-generating agent contained therein is activated in the presence of water to release carbon dioxide, the presence of water is essential, and the gas release rate is greatly influenced also by the humidity present in an environment where the resin material is used, therefore it has been difficult to release a gas at a constant rate for long hours.

Disclosure of the Invention

The present invention has been made with an aim of providing, in order to enable control of gas-environment which has become increasingly necessary in various fields, a polymer composition which can release a substance and enable control of gas-concentration hitherto considered to be difficult, for long hours at a high accuracy usefully and efficiently.

The present inventors devoted themselves to make a study in order to achieve the above aim, and have completed the present invention.

That is, the present invention is specified by the matters described below.

(1) A polymer composition (A) characterized by comprising a polymer (b) and at least one kind of substance (a) having a critical temperature of 0 to 150°C and a critical pressure of 3 to 10 MPa, the initial content of the substance (a) in the polymer composition being 2 to 70 parts by weight relative to 100 parts by weight of the polymer (b), wherein the release duration time of the substance (a) is at least 100 hours at atmospheric pressure at 25°C.

(2) A polymer composition (A) according to (1), characterized in that the average release rate of the substance (a) is $1.0 \times 10^{-5}$ to $1.0 \times 10^3$ g/h·m$^2$ at atmospheric pressure at 25°C.

(3) A polymer composition (A) according to (1) or (2), characterized in that the substance (a) is carbon dioxide.

(4) A polymer composition (A) according to any of

(1) to (3), characterized in that the polymer (b) contains at least one kind of recurring unit having at least one oxygen atom or nitrogen atom in the unit.

(5) A polymer composition (A) according to any of (1) to (4), characterized in that the polymer (b) is at least one kind of polymer selected from an aliphatic ester-based polymer (b1), an acrylic acid-based polymer (b2), a vinyl nitrile-based polymer (b3) and an amide-based polymer (b4).

(6) A polymer composition (A) according to (5), characterized in that the aliphatic ester-based polymer (b1) is at least one kind of polymer selected from lactic acid (co)polymer and glycolic acid (co) polymer.

(7) A polymer composition (A) according to any of (1) to (6), characterized by comprising a polymer (d) having a carbon dioxide permeability of $1 \times 10^{-3}$ to $1 \times 10^3$ cm$^3$/m$^2$·day·atm.

(8) A polymer composition (A) according to any of (1) to (7), characterized in that the polymer (d) is at least one kind of polymer selected from an acrylonitrile-based polymer (d1) and a vinyl alcohol-based polymer (d2).

(9) A process for producing a polymer composition (A) set forth in any of (1) to (9), characterized by comprising a step of placing the polymer (b) in a fluid containing the substance (a) at a higher concentration than an atmosphere of 25°C and 1 atm, to allow the polymer (b) to contain the substance (a).

(10) A molded article containing a polymer composition (A) set forth in any of (1) to (8).

(11) A process for producing a molded article set forth in (10), characterized by comprising a step of placing a molded article containing the polymer (b), in a fluid containing the substance (a) at a higher concentration than an atmosphere of 25°C and 1 atm, to allow the molded article to contain the substance (a).

Incidentally, in the present invention, "at atmospheric pressure" means "at an atmosphere of 1 atm (0.1013 MPa) having an ordinary composition".

Brief Description of the Drawings

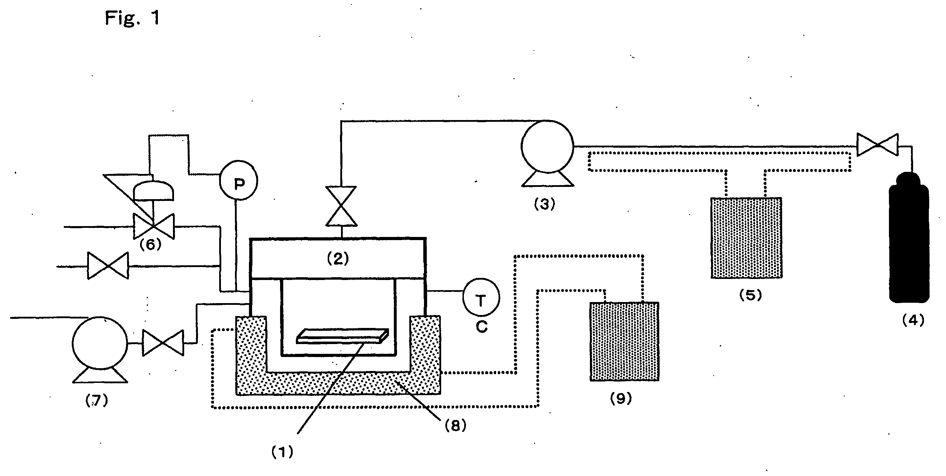

Fig. 1 is a schematic drawing showing an example of the process for producing the polymer composition (A) of the present invention. In Fig. 1, (1) is a raw material composition, (2) is a pressure vessel, (3) is a metering pump, (4) is a liquid carbon dioxide cylinder, (5) is a coolant circulator (for the metering pump), (6) is a pressure control valve, (7) is a vacuum pump, (8) is a cooling jacket, and (9) is a coolant circulator (for the pressure vessel).

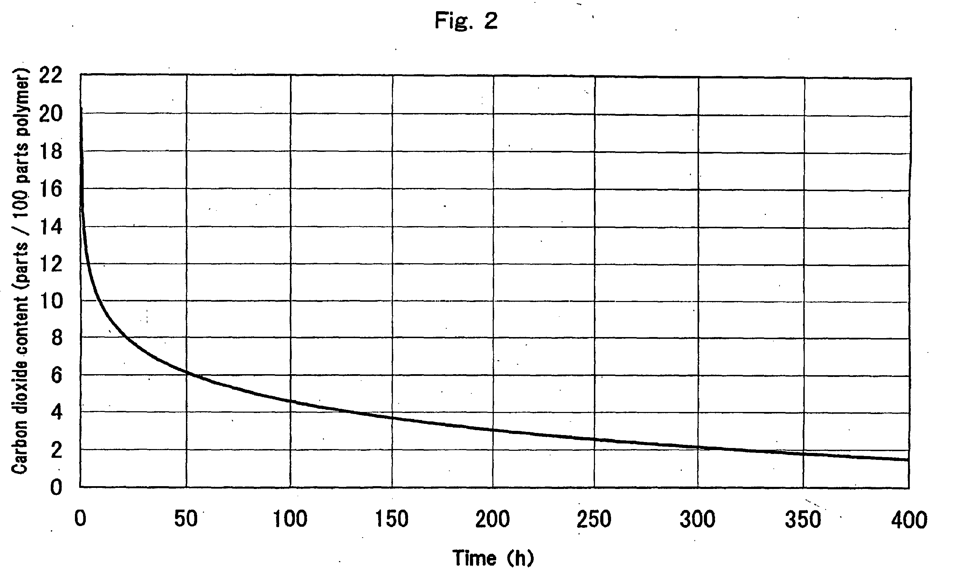

Fig. 2 is a graph showing a relation between time and carbon dioxide content in the test piece of the polymer composition (A) of Example 1. In the graph of Fig. 2, the axis of ordinate indicates the content of carbon dioxide in the test piece and shows the weight parts of carbon dioxide contained in 100 parts by weight of the polymer contained in the test piece. "Parts" in the unit refer to "parts by weight". The axis of abscissa indicates time (measurement time) and the unit is hours (h).

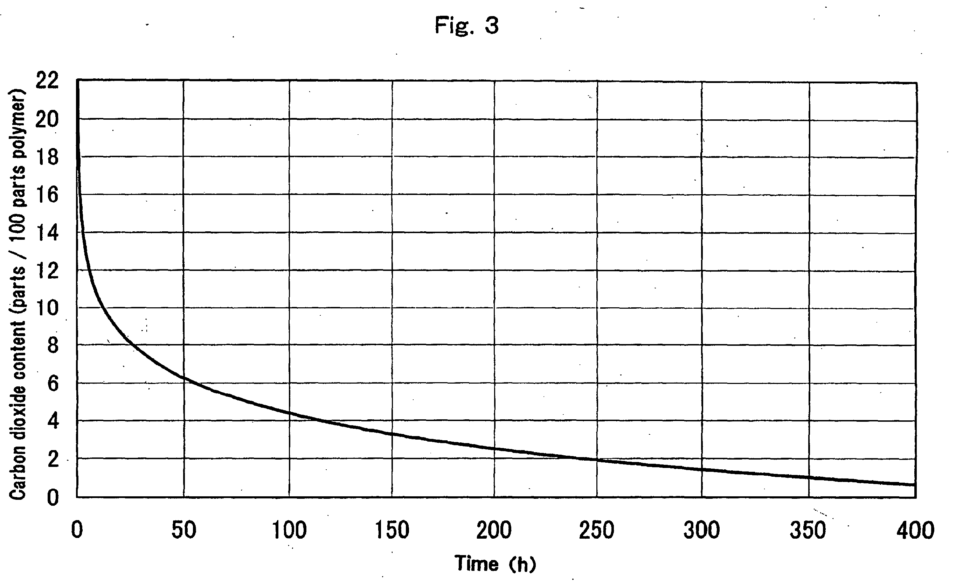

Fig. 3 is a graph showing a relation between time and carbon dioxide content in the test piece of the polymer composition (A) of Example 2. In the graph of Fig. 3, the axis of ordinate indicates the content of carbon dioxide in the test piece and shows the weight parts of carbon dioxide contained in 100 parts by weight of the polymer contained in the test piece. "Parts" in the unit refer to "parts by weight". The axis of abscissa indicates time (measurement time) and the unit is hours (h).

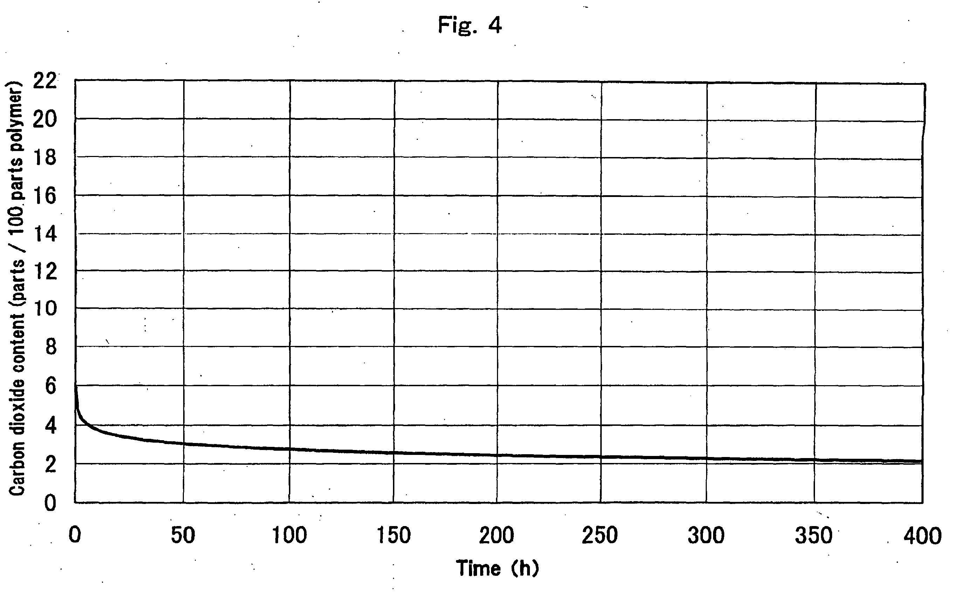

Fig. 4 is a graph showing a relation between time and carbon dioxide content in the test piece of the polymer composition (A) of Example 3. In the graph of Fig. 4, the axis of ordinate indicates the content of carbon dioxide in the test piece and shows the weight parts of carbon dioxide contained in 100 parts by weight of the polymer contained in the test piece. "Parts" in the unit refer to "parts by weight". The axis of abscissa indicates time (measurement time) and the unit is hours (h).

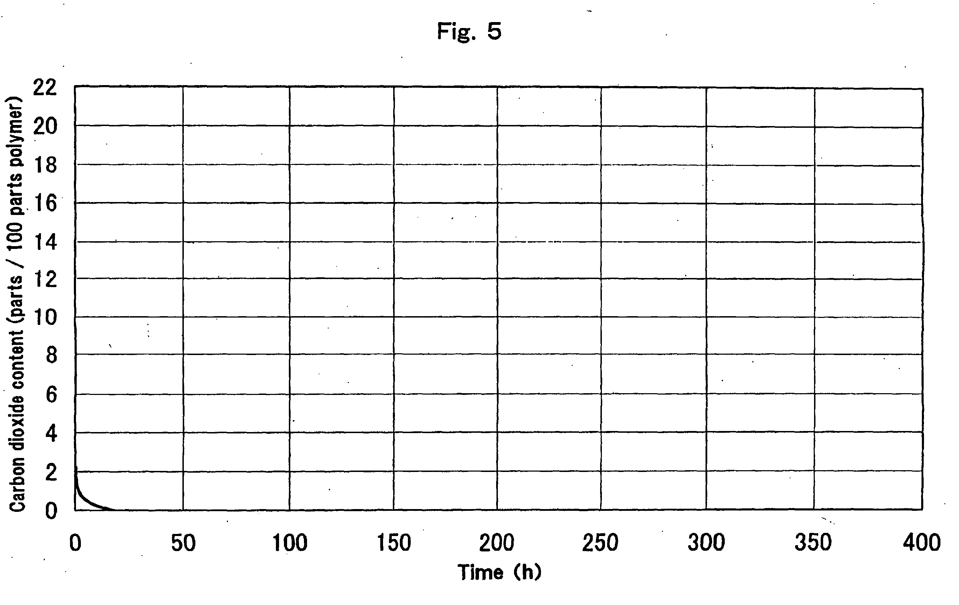

Fig. 5 is a graph showing a relation between time and carbon dioxide content in the carbon dioxide-containing test piece of Comparative Example 1. In the graph of Fig. 5, the axis of ordinate indicates the content of carbon dioxide in the test piece and shows the weight parts of carbon dioxide contained in 100 parts by weight of the polymer contained in the test piece. "Parts" in the unit refer to "parts by weight". The axis of abscissa indicates time (measurement time) and the unit is hours (h).

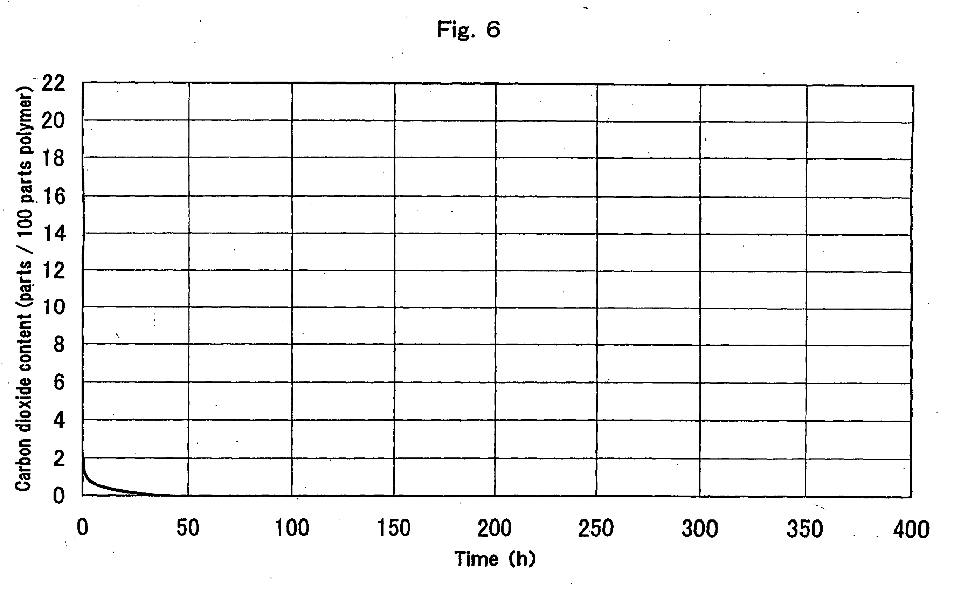

Fig. 6 is a graph showing a relation between time and carbon dioxide content in the carbon dioxide-containing test piece of Comparative Example 2. In the graph of Fig. 6, the axis of ordinate indicates the content of carbon dioxide in the test piece and shows the weight parts of carbon dioxide contained in 100 parts by weight of the polymer contained in the test piece. "Parts" in the unit refer to "parts by weight". The axis of abscissa indicates time (measurement time) and the unit is hours (h).

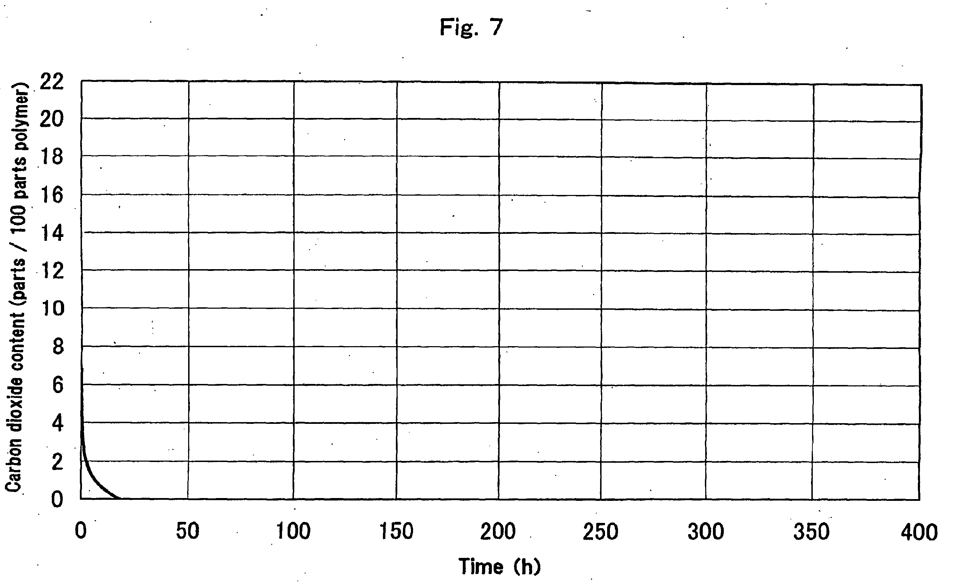

Fig. 7 is a graph showing a relation between time and carbon dioxide content in the carbon dioxide-containing test piece of Comparative Example 3. In the graph of Fig. 7, the axis of ordinate indicates the content of carbon dioxide in the test piece and shows the weight parts of carbon dioxide contained in 100 parts by weight of the polymer contained in the test piece. "Parts" in the unit refer to "parts by weight". The axis of abscissa indicates time (measurement time) and the unit is hours (h).

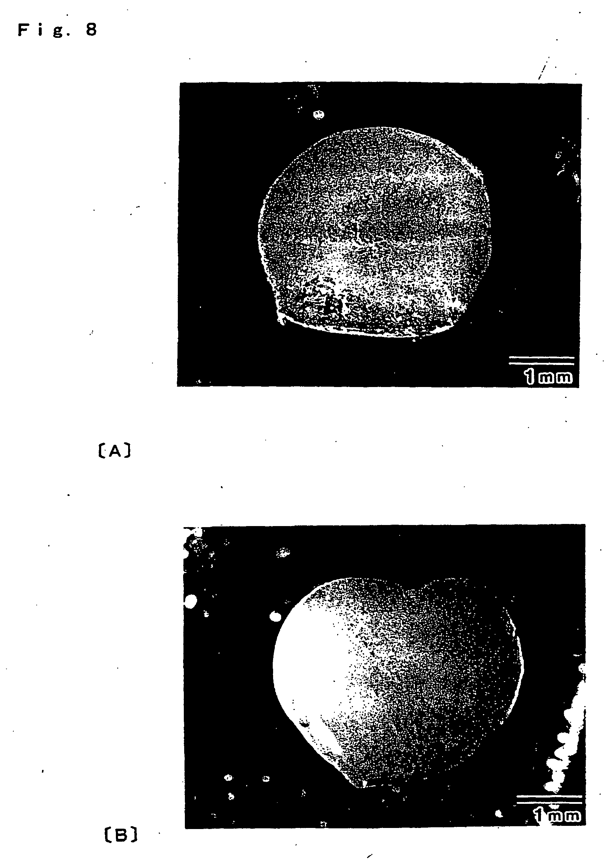

Fig. 8 is optical-microscopical photographs of the sections of a pellet of the polymer (b) and a pellet of the polymer composition (A) after 300 hours of measurement time, both used in Example 4.

Best Mode for Carrying Out the Invention

[Polymer composition (A)]

The polymer composition (A) of the present invention is a polymer composition characterized by comprising a polymer (b) and at least one kind of substance (a) having a critical temperature of 0 to 150°C and a critical pressure of 3 to 10 MPa, the content of the substance (a) in the polymer composition (A) being 2 to 70 parts by weight, preferably 2 to 50 parts by weight, more preferably 2 to 30 parts by weight relative to 100 parts by weight of the polymer (b), wherein the release duration time of the substance (a) is at least 100 hours at atmospheric pressure at 25°C.
In the polymer composition (A) of the present invention, the release duration time is preferably at least 200 hours, more preferably at least 300 hours. The polymer composition (A) of the present invention generally has a release duration time of one year or less, preferably more than one year to five years or less, more preferably more than five years to ten years or less.
The polymer composition (A) of the present invention is also characterized in that the average release rate of the substance (a) at atmospheric pressure at 25°C is preferably $1.0 \times 10^{-5}$ to $1.0 \times 10^{3}$ g/h·m², more

preferably $1.0 \times 10^{-4}$ to $1.0 \times 10^2$ g/h·m².

That is, by using a polymer composition (A) capable of releasing a substance (a) in an intended application at a release rate corresponding to a required amount, a gas environment can be controlled at a high accuracy usefully and efficiently.

When the initial content of the substance (a) and the release duration time are in the above ranges and the average release rate of the substance (a) is as above, the polymer composition (A) can exhibit its function of releasing the substance (a) at low temperatures or high temperatures or even in water.

When the substance (a) contained in the polymer composition (A) is two or more kinds, the respective average release rates of the substance (a) may be different from each other; however, a sufficient function is exhibited as long as the above conditions are satisfied.

In the polymer composition (A) of the present invention, it is possible to use, for control of the average release rate of the substance (a), in combination with the polymer (b), a polymer of low gas permeability, i.e. a polymer (d) having a carbon dioxide permeability as measured at 23±2°C according to JIS K 7126 Method A (pressure difference method), of preferably $1 \times 10^{-5}$ to 10 cm³·cm/cm²·sec·cmHg, more preferably $3 \times 10^{-5}$ to 1 cm³·cm/cm²·sec·cmHg.

The polymer composition (A) of the present invention may further comprise various additives depending upon the application purpose.

Incidentally, the mechanism of inclusion and release of the substance (a) in the polymer composition (A) of the present invention is not clear; however, it is presumed that the solubility and diffusibility of the substance (a) in the polymer (b) influence greatly.

As the factors determining the solubility of the substance (a) in the polymer (b), there are mentioned the solubility parameter, the chemical structure, the glass transition temperature of the polymer (b), etc. As to the diffusibility of the substance (a) in the polymer (b), there are mentioned the chemical structure, the free volume of the polymer (b), etc. It is presumed that these factors influence each other in a complicated manner and thereby the unique functions of the present polymer composition (A) are expressed. For example, when the substance (a) is carbon dioxide and the polymer (b) is a polymer having an ester bond, the polymer composition (A) of the present invention is easy to contain carbon dioxide but difficult to release it; this is presumed to be due to the interaction between carbon dioxide and the ester bond moiety of the polymer (b).

[Content of substance (a) in polymer composition (A)]

In the polymer composition (A) of the present invention comprising 100 parts by weight of a polymer (b) and Sa part by weight of a substance (a) [hereinafter, Sa may refer to the content of the substance (a)], the content (Sa) of the substance (a) can be evaluated by a method described below.

The components constituting the polymer composition (A) of the present invention, other than the substance (a) are mixed to prepare a composition (this may be referred to as raw material composition); the composition is heated and melted by an extruder to prepare raw material composition pellets; using the pellets, a strip test piece of 70 mm in length, 25 mm in width and 1 mm in thickness is produced. The test piece is measured for weight (it may be referred to as W) and then is placed in a pressure vessel; the pressure vessel is tightly sealed and heated to a predetermined temperature; the air in the pressure vessel is replaced with the substance (a). Then, the substance (a) is introduced using a metering pump and the pressure inside the pressure vessel is increased to a predetermined level; the pressure is maintained for a given length of time by appropriately introducing the substance (a) into the pressure vessel; thereby, the polymer (b) is allowed to contain the substance (a).

After the taking of the substance (a) into the polymer (b) is substantially over, the temperature of the pressure vessel is lowered; when the temperature inside the pressure vessel has reached a predetermined level, the substance (a) in the pressure vessel is purged and the pressure inside the pressure vessel is returned to 1 atm. The test piece containing the substance (a) is taken out; immediately, the test piece is mounted on a balance (measurement limit: 0.1 mg) and the weight of the test piece is measured. The timing at which the pressure has been returned to 1 atm, is taken as a timing at which the release of the substance (a) has started. Using this timing as a time standard, the weight of the test piece at a given time (this time may hereinafter be referred to as measurement time, time or t, and the weight may be referred to as $W_t$) is measured. A value defined by the following calculation formula (1) is determined and is taken as content (Sa) of substance (a) at a time t.

$$Sa = 100 \times (W_t - W)/W \cdot R \qquad (1)$$

The R in the calculation formula (1), refers to a weight fraction of the polymer (b) contained in the test piece and, when the weight of the polymer (b) contained in the test piece is expressed by $w_b$, the R is given by $w_b/W$.

The initial content of the substance (a) in the polymer composition (A) is determined by substituting the weight of the test piece measured right after the test piece has been mounted on a balance (measurement time: 6 minutes or less, and the weight may be referred to as $W_s$), into the $W_t$ of the above calculation formula (1).

[Release duration time of substance (a) from polymer composition (A)]

Meanwhile, the release duration time (this may be expressed as $T_d$) of the substance (a) from the polymer composition (A) of the present invention can be determined by measuring a time taken for the weight ($W_t$) of the test piece after introducing the substance (a) thereinto to come to agree with the weight (W) of the test piece before introducing the substance (a) thereinto within the margin of error according to the above-mentioned measuring method.

[Average release rate of substance (a)]

In the present invention, the average release rate of the substance (a) can be evaluated by the following method.

Using the surface area (hereinafter may be referred to as S) of the test piece before introducing the substance (a) thereinto and the weights of the test piece at measurement times of 100 hours and 200 hours (hereinafter, the weights may be referred to as $W_{100}$ and $W_{200}$, respectively), a value defined by the following calculation formula (2) is calculated and it is taken as the average release rate of the substance (a) (the rate may hereinafter be referred to as Gr).

$$Gr = (W_{100} - W_{200})/100 \cdot S \qquad (2)$$

[Substance (a)]

The substance (a) constituting the polymer composition (A) of the present invention is a substance having a critical temperature of 0 to 150°C, preferably 5 to 100°C, more preferably 9 to 50°C and a critical pressure of 3 to 10 MPa, preferably 4 to 9 MPa, more preferably 5 to 8 MPa.

The substance (a) having a critical temperature and critical pressure of the above ranges can dissolve in or diffuse into the polymer (b) at a relatively high rate by pressuring the substance (a) (heating it as necessary) to forming a high pressure gaseous phase, a liquid phase or a fluid of critical or supercritical state, each containing the substance (a). Thereby, the substance (a) can be easily taken into the polymer (b).

As specific examples of the substance (a), there can be mentioned acetylene ($C_2H_2$), ethylene ($C_2H_4$), ethane ($C_2H_6$), propene ($C_3H_6$), propane ($C_3H_6$), isobutane (i-$C_4H_{10}$), methyl chloride ($CH_3Cl$), freon 13 ($CClF_3$), freon 12 ($CCl_2F_2$), chlorine ($Cl_2$), hydrogen chloride (HCl), carbon dioxide ($CO_2$), nitrous oxide ($N_2O$), ammonia ($NH_3$) and hydrogen sulfide ($H_2S$), all having a critical temperature of 0 to 150°C and a critical pressure of 3 to 10 MPa. As preferred examples of the substance (a), there can be mentioned acetylene

($C_2H_2$), ethylene ($C_2H_4$), ethane ($C_2H_6$), propene ($C_3H_6$), propane ($C_3H_6$), hydrogen chloride (HCl), carbon dioxide ($CO_2$) and nitrous oxide ($N_2O$), all having a critical temperature of 5 to 100°C and a critical pressure of 4 to 9 MPa. As more preferred examples of the substance (a), there can be mentioned acetylene ($C_2H_2$), ethylene ($C_2H_4$), carbon dioxide ($CO_2$) and nitrous oxide ($N_2O$), all having a critical temperature of 9 to 50°C and a critical pressure of 5 to 8 MPa.

In the present invention, the substance (a) may be used in combination of two or more kinds of the substances (a). Further, the substance (a) may be used in combination with other substance, i.e. a substance having a critical temperature not falling in the range of 0°C to 150°C and a critical pressure of not falling in the range of 3 MPa to 10 MPa, as long as the object of the present invention is , achievable.

[Polymer (b)]

The polymer (b) constituting the polymer composition (A) of the present invention can be used with no restriction as long as it is a polymer which can contain the substance (a) in an initial amount of 2 parts by weight or more, preferably 3 parts by weight or more, more preferably 5 parts by weight or more per 100 parts by weight of the polymer and which has a release duration time of the substance (a) at atmospheric pressure at 25°C, of at least 100 hours, preferably at least 200 hours, more preferably at least 300 hours.

The polymer (b) used in the present invention may be noncrystalline or crystalline. As the polymer (b), there is generally preferred a polymer of low crystallinity; a polymer having a crystallinity in the range of 0 to 50% is preferred and a polymer having a crystallinity in the range of 0 to 30% is more preferred.

The polymer (b) satisfying the above requirement differs depending upon the kind of the substance (a) used in combination with the polymer (b). The combination of the substance (a) and the polymer (b) both constituting the polymer composition (A) of the present invention can be easily selected by measuring the initial content of the substance (a) in the polymer (b) and the release duration time of the substance (a) contained in the polymer (b), according to the above-mentioned methods.

For example, when the substance (a) is carbon dioxide, the polymer (b) is preferably such a polymer that at least one kind of recurring unit thereof contains at least one oxygen atom or nitrogen atom in the recurring unit, more preferably such a polymer that the recurring unit contains two oxygen atoms, further preferably such a polymer that the recurring unit contains an ester bond. The polymer (b) may further contain other polar group.

As preferred specific examples of the polymer (b), there can be mentioned an aliphatic ester-based polymer (b1), an acrylic acid-based polymer (b2), a vinyl nitrile-based polymer (b3) and an amide-based polymer (b4).

As the aliphatic ester-based polymer (b1), there can be mentioned, for example, lactic acid (co)polymers and glycolic acid (co)polymers. Of these, preferred are a lactic acid polymer, a glycolic acid polymer, a lactic acid-glycolic acid copolymer.

As the acrylic acid-based polymer (b2), there can be mentioned, for example, methyl acrylate (co)polymers and methyl methacrylate (co)polymers.

As the vinyl nitrile-based polymer (b3), there can be mentioned, for example, acrylonitrile (co)polymers. Of these, preferred is an acrylonitrile-methyl acrylate copolymer.

As the amide-based polymer (b4), there can be mentioned, for example, nylon 6, nylon 66, nylon 46, an aromatic polyamide and modified polyamide 6T.

As the polymer (b) constituting the polymer composition (A) of the present invention, one kind of polymer or a combination of two or more kinds of polymers can be used.

Incidentally, in the present invention, the term "(co)polymer" refers to a homopolymer of a monomer or a copolymer of a monomer and other monomer copolymerizable with the monomer.

[Solubility of substance (a) in polymer (b) and release duration time]

In the present invention, the solubility of the substance (a) in the polymer (b) can be evaluated in the same manners as described in the above items, "Content of substance (a) in polymer composition (A)" and "Release duration time of substance (a) from polymer composition (A)", except that the polymer (b) is used in place of the raw material composition.

[Polymer (d)]

As specific examples of the above-mentioned polymer (d) of low gas permeability usable in the polymer composition (A) of the present invention in combination with the polymer (b), there can be mentioned vinyl alcohol (co)polymers, vinylidene chloride (co)polymers, acrylonitrile (co)polymers, nylon (co)polymers, vinyl chloride (co)polymers and vinyl acetate (co)polymers. Of these, preferred are vinyl alcohol (co)polymers and acrylonitrile (co)polymers and particularly preferred are a vinyl alcohol-ethylene copolymer and an acrylonitrile-methyl acrylate copolymer.

The polymer (d) may be mixed or alloyed with the polymer (b) beforehand and be used in production of the polymer composition (A), or the polymer composition (A) may be produced beforehand and the polymer (d) may be added thereto for mixing or alloying. As to the method for alloying, there is no particular restriction as long as it is melt blending, solution blending or other known method.

[Various additives]

In the polymer composition (A) of the present invention, various additives may be used depending upon the application purpose.

As the additives usable in the present invention, there can be mentioned an antioxidant, a ultraviolet light inhibitor, a lubricant, a pigment, a dye, a flame-retardant, an antibacterial agent, an antistatic agent, etc.

[Process for production of polymer composition (A)]

An example of the process for production of the polymer composition (A) of the present invention is described referring to Fig. 1. Incidentally, a case where the substance (a) is carbon dioxide, is described. However, the present invention is not restricted to this example.

Components constituting the polymer composition (A) of the present invention, other than the substance (a) are mixed to prepare a raw material composition. The composition is heated and melted by an extruder to prepare raw material composition pellets (not shown in Fig. 1). The method for preparing the raw material composition pellets is not particularly restricted, and an appropriate method may be selected from known methods.

The raw material composition pellets are placed in a pressure vessel (1); the vessel is tightly sealed; and the air in the pressure vessel (1) is replaced with carbon dioxide. Then, the pressure vessel is heated to a predetermined temperature; carbon dioxide is introduced using a metering pump (3) to increase the pressure inside the pressure vessel to a predetermined level; the pressure is maintained for a given length of time by appropriately introducing carbon dioxide into the pressure vessel (1), to allow the raw material composition pellets to contain carbon dioxide.

When the content of carbon dioxide in the pellets has reached an intended level, the temperature of the pressure vessel (1) is decreased; when the temperature inside the vessel has reached an intended level, the carbon dioxide inside the pressure vessel (1) is purged to return the pressure inside the pressure vessel (1) to 1 atm.; thereby, polymer composition (A) pellets containing carbon dioxide in an intended amount can be obtained.

When the above process is used, the amount of carbon dioxide in the polymer composition (A) differs depending upon the pressure, temperature and time at or for which carbon dioxide is taken into, the kinds of the components other than carbon dioxide, constituting the polymer composition (A), the crystallinities of the components constituting the polymer composition (A), shapes of the polymer composition (A), and so forth.

Accordingly, the conditions such as the pressure, temperature and time at or for which carbon dioxide is taken into, and the like may be appropriately selected depending upon the amount of carbon dioxide (substance (a)) taken into the polymer composition (A), the properties of the raw material composition and shapes of the polymer composition (A).

When the raw material composition is formed beforehand in a form of pellets, powder or the like, or, optionally, molded article and then the substance (a) is introduced to prepare the polymer composition (A) as in the above process, the pressure of the substance (a) is generally preferred to be 1 to 100 MPa and more preferred to be 3 to 50 MPa. In general, when the pressure is 100 MPa or less, the pressure vessel need not be massive and its gas tightness can be kept easily. Meanwhile, when the pressure is 1 MPa or more, the substance (a) can be easily taken into the polymer (b).

The temperature, when the substance (a) is taken into, is generally preferred to be -30 to 300°C and more preferred to be 10 to 200°C. When the temperature is 300°C or less, the deformation or decomposition of the polymer composition (A) can be prevented and the energy required for heating can be small. When the temperature is -30°C or more, the diffusion rate of the substance (a) is larger, the dissolution rate is higher, and the substance (a) can be taken into in a shorter time; therefore, a higher productivity is possible.

The time of introducing the substance (a) is generally preferred to be 0.1 to 500 hours and more preferred to be 0.5 to 100 hours. By using a time of 0.1 hour or more, severe conditions of temperature and pressure can be avoided and the substance (a) can be taken into under appropriate temperature and pressure conditions. By using a time of 500 hours or less, an improvement in productivity is possible.

[Molded article containing polymer composition (A)]

The molded article of the present invention containing the polymer composition (A) can be produced by using the polymer composition (A) of the present invention and subjecting it to a known molding method such as injection molding, extrusion molding or the like.

In producing the molded article of the present invention, the polymer composition (A) of the present invention may be combined with other polymer as long as the effects of the present invention are not impaired.

The molded article of the present invention may also be produced by beforehand forming a molded article from the raw material composition and then introducing the substance (a) into the molded article in the same manner as in the production process of the polymer composition (A).

The molded article of the present invention has no particular restriction as to the shape. The shape may be, for example, a powder, beads, pellets, a film, a sheet, a filament, a strand, a block, a tube, a pipe, a column or a box and there is no particular restriction as to the shape.

In the molded article of the present invention, the release rate of the substance (a) can be controlled by selecting the shape of the molded article. The release rate of the substance (a) can be made large, for example, by making the molded article as a thin film of large surface area per unit volume (specific surface area); and the release rate of the substance (a) can be made small by making the molded article as a block of small specific surface area.

In the molded article of the present invention, the release rate of the substance (a) can also be controlled by coating the surface of the molded article partially or wholly with, for example, the above-mentioned polymer (d) of low gas permeability. As the method for coating the surface of the molded article of the present invention, a known coating method can be used. There are mentioned, for example, an extrusion lamination method, a wet method, a dry method, a hot melt method and a co-extrusion method. There is no particular restriction as to the coating method, and a coating method suitable to the shape of the molded article may be employed. For a sheet-shaped molded article, for example, there is mentioned a method of laminating the both sides, of the molded article with a film of the above-mentioned polymer (d). As the lamination method, there are mentioned an extrusion lamination method, a wet method, a dry method, a hot melt method, a co-extrusion method, etc. Besides, a known method may be used for the lamination. In this case, the thickness of the sheet-shaped molded article of the present invention is generally preferred to be 0.1 to 100 mm, and the thickness of the polymer (d) film is preferred to be 0.01 to 10 mm.

[Examples]

Hereinafter, the present invention is described in detail with reference to the following examples. Incidentally, in the present Examples, "parts" refer to "parts by weight".

(Example 1)

There was used, as the polymer (b), a lactic acid polymer, LACEA H100PL (a trade name, a product of Mitsui Chemicals, Inc.). It was injection-molded to produce a strip molded article of 70 mm in length, 25 mm in width and 1.0 mm in thickness. The molded article was used as a test piece, and carbon dioxide was used as the substance (a).

The test piece was measured for weight (W) and then inserted into a pressure vessel (2), and the pressure vessel was tightly sealed. The pressure vessel (2) was heated using a band heater, to a temperature of 100°C. Then, the air inside the pressure vessel (2) was replaced with carbon dioxide. The pressure of the carbon dioxide was increased by a metering pump (3) to increase the pressure inside the pressure vessel (2) to 20 MPa. Then, the temperature and pressure conditions (100°C and 20 MPa) were maintained for 3 hours. During this period, the polymer (b) in the pressure vessel (2) dissolved carbon dioxide and thereby the pressure inside the system was decreased. Whenever the pressure decrease took place, carbon dioxide was fed to maintain the pressure.

When 3 hours passed, the heating by the band heater was stopped, water was passed through a cooling jacket (8) covering the pressure vessel (2), and the temperature inside the pressure vessel was cooled from 100°C to 40°C with the pressure inside the pressure vessel (2) being maintained at 20 MPa. The time required for this operation was about 1 hour. Thereafter, the carbon dioxide inside the pressure vessel (2) was purged and the pressure inside the pressure vessel was returned to 1 atm, whereby a polymer composition (A) of the present invention was prepared. The test piece containing carbon dioxide was taken out from the pressure vessel (2) and immediately measured for weight ($W_s$) using a balance (LA230, a trade name, a product of SARTORIUS, limit of measurement 0.1 mg). At this time, the initial content of carbon dioxide in the polymer composition (A), defined by the calculation formula (1) was 21 parts by weight per 100 parts by weight of the polymer (b).

The carbon dioxide contained in the polymer (b) is released into the air by diffusion, by return to atmospheric pressure and 25°C, and the weight of the polymer composition (A) decreases with the lapse of time. The change with time, of the weight of the polymer composition (A) after return to atmospheric pressure and 25°C was measured.

The carbon dioxide contents (Sa) defined by the calculation formula (1), at the measurement times of 50 hours, 100 hours and 200 hours were, respectively, 6.1 parts by weight, 4.6 parts by weight and 3.0 parts by weight per 100 parts by weight of the polymer (b). The average release rate (Gr) of carbon dioxide defined by the calculation formula (2) was 9.6 x 10$^{-2}$ g/h·m$^2$.

(Example 2)

The present Example was carried out in the same manner as in Example 1 except that there was used, as the polymer (b), a methyl methacrylate polymer, Parapet G (a trade name, a product of Kuraray Co., Ltd.). The test piece was taken out from the pressure vessel (2) and immediately measured for the initial content of carbon dioxide defined by the calculation formula (1). The initial carbon dioxide content was 22 parts by weight per 100 parts by weight of the methyl methacrylate polymer.

The carbon dioxide contents (Sa) defined by the calculation formula (1), at the measurement times of 50 hours, 100 hours and 200 hours were, respectively, 6.2 parts by weight, 4.4 parts by weight and 2.5 parts by weight per 100 parts by weight of the polymer (b). The average release rate (Gr) of carbon dioxide defined by the calculation formula (2) was 1.1 x 10$^{-1}$ g/h·m$^2$.

(Example 3)

The present Example was carried out in the same manner as in Example 1 except that there was used, as the polymer (b), an acrylonitrile-methyl acrylate copolymer, BAREX 1000N (a trade name, a product of Mitsui Chemicals, Inc.). The test piece was taken out from the pressure vessel (2) and immediately measured for the initial content of carbon dioxide defined by the calculation formula (1). The initial carbon dioxide content was 6 parts by weight per 100 parts by weight of the acrylonitrile-methyl acrylate copolymer.

The carbon dioxide contents (Sa) defined by the calculation formula (1), at the measurement times of 50 hours, 100 hours and 200 hours were, respectively, 3.1 parts by weight, 2.8 parts by weight and 2.4 parts by weight per 100 parts by weight of the polymer (b). The average release rate of carbon dioxide defined by the calculation formula (2) was 2.2 x 10$^{-2}$ g/h·m$^2$.

Incidentally, the relations between time and the carbon dioxide content defined by the calculation formula (1), in Examples 1 to 3 are shown in Figs. 2 to 4.

(Comparative Example 1)

The present Comparative Example was carried out in the same manner as in Example 1 except that there was used, as the polymer, an ethylene polymer, Mirason 14P (a trade name, a product of Mitsui Chemicals, Inc.). The test piece was taken out from the pressure vessel (2) and immediately measured for the initial content of carbon dioxide defined by the calculation formula (1). The initial carbon dioxide content was 2 parts by weight per 100 parts by weight of the ethylene polymer.

The carbon dioxide content (Sa) defined by the calculation formula (1), at the measurement time of 50 hours was 0 part by weight per 100 parts by weight of the ethylene polymer.

(Comparative Example 2)

The present Comparative Example was carried out in the same manner as in Example 1 except that there was used, as the polymer, a propylene polymer, GRAND POLYPRO J106 (a trade name, a product of Grand Polymer Co., Ltd.). The test piece was taken out from the pressure vessel (2) and immediately measured for the initial content of carbon dioxide defined by the calculation formula (1). The initial carbon dioxide content was 2 parts by weight per 100 parts by weight of the propylene polymer.

The carbon dioxide content (Sa) defined by the calculation formula (1), at the measurement time of 50 hours was 0 part by weight.

(Comparative Example 3)

The present Comparative Example was carried out in the same manner as in Example 1 except that there was used, as the polymer, a styrene polymer, NIPPON POLYSTY G120K (a trade name, a product of Nippon Polystyrene Co., Ltd.). The test piece was taken out from the pressure vessel (2) and immediately measured for the initial content of carbon dioxide defined by the calculation formula (1). The initial carbon dioxide content was 7 parts by weight per 100 parts by weight of the styrene polymer.

The carbon dioxide content (Sa) defined by the calculation formula (1), at the measurement time of 50 hours was 0 part by weight.

Incidentally, the relations between time and the carbon dioxide content defined by the calculation formula (1), in Comparative Examples 1 to 3 are shown in Figs. 5 to 7.

The results of Examples 1 to 3 and Comparative Examples 1 to 3 are all shown in Table 1.

(Example 4)

The present Example was carried out in the same manner as in Example 1 except that there was used, as the polymer (b), 5 g (about 150 grains) of spherical pellets of about 4 mm in average diameter, produced from a lactic acid polymer, LACEA H100PL (a trade name, a product of Mitsui Chemicals, Inc.). The spherical pellets were taken out from the pressure vessel (2) and immediately measured for the initial content of carbon dioxide defined by the calculation formula (1). The initial carbon dioxide content was 19 parts by weight per 100 parts by weight of the lactic acid polymer.

The carbon dioxide contents (Sa) defined by the calculation formula (1), at the measurement times of 50 hours, 100 hours and 200 hours were, respectively, 6.3 parts by weight, 4.3 parts by weight and 2.3 parts by weight per 100 parts by weight of the polymer (b). The average release rate of carbon dioxide defined by the calculation formula (2) was $1.2 \times 10^{-1}$ g/h·m$^2$.

Each one grain was taken out from the pellets before introducing carbon dioxide thereinto (the polymer (b) pellets) and the pellets after introducing carbon dioxide thereinto (the polymer composition (A) pellets) at the measurement time of 300 hours, and their sections were photographed using an optical microscope, SGX 9 (a trade name, a product of Olympus Optical Co., Ltd.) for comparative observation. It was confirmed that there was no change in the states of the sections.

Incidentally, the above microphotographs are shown in Fig. 8. In Fig. 8, [A] is a microphotograph of the section of the pellet of the lactic acid polymer, the LACEA H100PL before introducing carbon dioxide thereinto (pellet of the polymer (b)), and [B] is a microphotograph of the section of the pellet of the lactic acid polymer, LACEA H100PL after introducing carbon dioxide thereinto at the measurement time of 300 hours (pellet of the polymer composition (A)).

Industrial Applicability

While control of gas concentration has become increasingly necessary in various fields, it has become possible by the use of the polymer composition (A) of the present invention to conduct the control for long hours at a high accuracy usefully and efficiently. Therefore, the use of the present polymer composition (A) to new product fields can be expected.

**Claims**

1. A polymer composition (A) **characterized by** comprising a polymer (b) and at least one kind of substance (a) having a critical temperature of 0 to 150°C and a critical pressure of 3 to 10 MPa, the initial content of the substance (a) in the polymer composition being 2 to 70 parts by weight relative to 100 parts by weight of the polymer (b), wherein the release duration time of the substance (a) is at least 100 hours at atmospheric pressure at 25°C.

2. A polymer composition (A) according to Claim 1, **characterized in that** the average release rate of the substance (a) is $1.0 \times 10^{-5}$ to $1.0 \times 10^3$ g/h·m$^2$ at atmospheric pressure at 25°C.

3. A polymer composition (A) according to Claim 1 or 2, **characterized in that** the substance (a) is carbon dioxide.

4. A polymer composition (A) according to any of Claims 1 to 3, **characterized in that** the polymer (b) contains at least one kind of recurring unit having at least one oxygen atom or nitrogen atom in the unit.

5. A polymer composition (A) according to any of Claims 1 to 4, **characterized in that** the polymer (b) is at least one kind of polymer selected from an aliphatic ester-based polymer (b1), an acrylic acid-based polymer (b2), a vinyl nitrile-based polymer (b3) and an amide-based polymer (b4).

6. A polymer composition (A) according to Claim 5, **characterized in that** the aliphatic ester-based polymer (b1) is at least one kind of polymer selected from lactic acid (co)polymer and glycolic acid (co) polymer.

7. A polymer composition (A) according to any of Claims 1 to 6, **characterized by** comprising a polymer (d) having a carbon dioxide permeability of $1 \times 10^{-3}$ to $1 \times 10^3$ cm$^3$/m$^2$·day·atom.

8. A polymer composition (A) according to any of Claims 1 to 7, **characterized in that** the polymer (d) is at least one kind of polymer selected from an acrylonitrile-based polymer (d1) and a vinyl alcohol-based polymer (d2).

9. A process for producing a polymer composition (A) set forth in any of Claims 1 to 9, **characterized by** comprising a step of placing the polymer (b) in a fluid containing the substance (a) at a higher concentration than an atmosphere of 25°C and 1 atm, to allow the polymer (b) to contain the substance (a).

10. A molded article containing a polymer composition (A) set forth in any of Claims 1 to 8.

11. A process for producing a molded article set forth in Claim 10, **characterized by** comprising a step of placing a molded article containing the polymer (b), in a fluid containing the substance (a) at a higher concentration than an atmosphere of 25°C and 1 atm, to allow the molded article to contain the substance (a).

Fig. 1

(4)

(5)

(6)

(3)

(9)

T
C

(8)

(2)

(1)

P

(6)

(7)

Fig. 2

Fig. 3

EP 1 316 579 A1

Fig. 4

Fig. 5

EP 1 316 579 A1

Fig. 6

Carbon dioxide content (parts / 100 parts polymer) vs Time (h)

Fig. 7

EP 1 316 579 A1

F i g. 8

[A]

[B]

## INTERNATIONAL SEARCH REPORT

| International application No. |
|---|
| PCT/JP01/07294 |

| A. CLASSIFICATION OF SUBJECT MATTER |
|---|
| Int.Cl$^7$    C08J3/20, C08J7/00, C08L101/00 |

According to International Patent Classification (IPC) or to both national classification and IPC

| B. FIELDS SEARCHED |
|---|
| Minimum documentation searched (classification system followed by classification symbols) <br>    Int.Cl$^7$    C08J3/00, C08J3/20, C08J7/00, C08L1/00-101/16 |
| Documentation searched other than minimum documentation to the extent that such documents are included in the fields searched |
| Electronic data base consulted during the international search (name of data base and, where practicable, search terms used) <br>    WPI/L |

### C. DOCUMENTS CONSIDERED TO BE RELEVANT

| Category* | Citation of document, with indication, where appropriate, of the relevant passages | Relevant to claim No. |
|---|---|---|
| X | JP 2000-128993 A (Kyoto Daigakuchou), <br> 09 May, 2000 (09.05.00), <br> Claims; example   (Family: none) | 1-3,7,9-11 |
| X | JP 2000-53871 A (Toray Industries, Inc.), <br> 22 February, 2000 (22.02.00), <br> Claims; example   (Family: none) | 1-11 |
| X | EP 492535 A2 (UNION CARBIDE CHEM & PLASTICS CO., INC), <br> 01 July, 1992 (01.07.92), <br> Claims; example <br> & JP 05-507312 A, Claims; example <br> & WO 92/11310 A2 | 1-11 |

| ☐ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search <br>    15 November, 2001 (15.11.01) | Date of mailing of the international search report <br>    27 November, 2001 (27.11.01) |
|---|---|
| Name and mailing address of the ISA/ <br>    Japanese Patent Office | Authorized officer |
| Facsimile No. | Telephone No. |

Form PCT/ISA/210 (second sheet) (July 1992)